# EUROPÄISCHE PATENTSCHRIFT

(11) **EP 4 526 410 B1**
(45) Veröffentlichungstag und Bekanntmachung des Hinweises auf die Patenterteilung: **21.01.2026**
(21) Anmeldenummer: 24736347.6
(22) Anmeldetag: 19.06.2024
(51) Int. Cl.: C10M 103/04, F16C 33/14

(54) **VERFAHREN ZUM HERSTELLEN EINER GLEITLAGERKOMPONENTE SOWIE GLEITLAGERKOMPONENTE**
SLIDING BEARING AND PROCESS OF MANUFACTURING SLIDING BEARING
UN ROULEMENT COULISSANT ET UN PROCÉDÉ À PRODUIRE CE ROULEMENT COULISSANT

(30) Priorität: 09.08.2023 DE 102023121315
(43) Veröffentlichungstag der Anmeldung: 26.03.2025
(73) Patentinhaber: KS Gleitlager GmbH, 68789 St. Leon-Rot (DE)
(72) Erfinder: GRAUVOGL, Manfred, 26817 Rhauderfehn (DE); SCHUBERT, Werner, 69168 Wiesloch (DE); SCHRAMM, Leander, 07407 Rudolstadt (DE); PUCHER, Klaus, 86391 Stadtbergen (DE)
(74) Vertreter: DREISS Patentanwälte PartG mbB
(86) Internationale Anmeldenummer: PCT/EP2024/067149
(87) Internationale Veröffentlichungsnummer: WO 2025/031652

(56) Entgegenhaltungen:
- WO-A1-2016/131074
- WO-A1-2022/159997

## Beschreibung

Die Erfindung betrifft ein Verfahren zum Herstellen einer Gleitlagerkomponente sowie eine Gleitlagerkomponente.

Gleitlager sind aus dem Stand der Technik in vielfältiger Weise bekannt und weisen üblicherweise eine erste Gleitlagerkomponente und eine relativ zu der ersten Gleitlagerkomponente bewegbare zweite Gleitlagerkomponente auf. Bei einem Drehlager kann es sich beispielsweise bei der ersten Gleitlagerkomponente um eine Gleitlagerwelle handeln, welche in einer Gleitlagerschale oder Gleitlagerbuchse als zweite Gleitlagerkomponente dreht.

Solche Gleitlager weisen üblicherweise auf einer oder beiden Gleitlagerkomponenten eine Gleitschicht aus einem Gleitlagerwerkstoff, beispielsweise Bronze, auf. Zu diesem Zweck ist es bekannt, den Gleitlagerwerkstoff auf eine meist metallische Stützschicht aufzusintern. Die Stützschicht mit aufgesinterter Gleitschicht kann dann bspw. in Form einer Gleitlagerbuchse auf eine Achse oder Welle aufgeschrumpft oder eingepresst werden.

Aus der WO 2022/159997 A1 ist ein Mehrschichtgleitlagerelement bekannt, umfassend eine auf einem Träger, bspw. einer Buchse, aufgebrachte Gleitschicht. Die Gleitschicht weist als Hauptbestandteil eine metallische Zusammensetzung auf, die aus zumindest drei Elementen A, B und C gebildet ist, wobei für jedes der Elemente A, B und C in axialer Richtung und gegebenenfalls in radialer Richtung des Mehrschichtgleitlagerelements ein Konzentrationsgradient ausgebildet ist. Zu diesem Zweck wird die Gleitschicht mittels eines PVD-Verfahrens, insbesondere Sputterverfahrens, aufgebracht, wobei die Konzentrationsgradienten durch entsprechende Steuerung der Sputtertargets eingestellt werden.

Ein weiteres Mehrschichtgleitlagerelement ist aus der WO 2016/131074 A1 bekannt.

Aus dem Stand der Technik ist es zudem bekannt, den Gleitlagerwerkstoff direkt auf eine Achse bzw. Welle, aufzutragen. Beispielsweise ist aus der WO 2019/178630 ein Windkraftanlagengetriebe bekannt, bei dem an einer Achse ein Gleitlagerwerkstoff mittels Auftragschweißen aufgebracht ist. Bei den direkt aufgebrachten Gleitschichten besteht jedoch weiter Verbesserungsbedarf hinsichtlich Verschleiß und Dauerfestigkeit.

Die Erfindung beschäftigt sich mit der Aufgabe, eine Gleitlagerkomponente mit reduziertem Verschleiß und höherer Dauerfestigkeit bereitzustellen.

Diese Aufgabe wird erfindungsgemäß durch ein Verfahren mit den Merkmalen des Anspruchs 1 gelöst. Hierbei handelt es sich um ein Verfahren zum Herstellen einer Gleitlagerkomponente, insbesondere einer Gleitlagerwelle oder Gleitlagerschale. Beispielhaft kann es sich bei der Gleitlagerkomponente um eine Welle oder Achse eines Getriebes einer Windkraftanlage handeln. Bei der Gleitlagerkomponente kann es sich beispielsweise auch um eine Anlaufscheibe oder einen Anlaufring handeln.

Die Gleitlagerkomponente umfasst ein Metallsubstrat, insbesondere aus Stahl oder beschichtetem Stahl, mit einer darauf aufgebrachten metallischen Gleitschicht von insbesondere höchstens 3 mm Dicke. Vorzugsweise handelt es sich bei dem Metallsubstrat um eine Welle oder Achse. Vorzugsweise ist die Gleitschicht eine Kupfer-Basislegierung, insbesondere eine Bronzeschicht (bspw. CuSn-, CuSnNi- oder CuSnZn-, CuAl-, CuMn-, CuZn-Legierung). Die Gleitschicht weist einen Mehrschichtaufbau aus wenigstens zehn, vorzugsweise wenigstens 20, sequenziell aufeinander aufgetragenen metallischen Materialschichten, insbesondere aus einem Gleitlagerwerkstoff, auf.

Gemäß dem Verfahren wird zunächst das Metallsubstrat bereitgestellt. Sodann wird die Gleitschicht auf das Metallsubstrat aufgebracht. Das Aufbringen der Gleitschicht umfasst das sequentielle Aufbringen von wenigstens zehn, vorzugsweise wenigstens 20, metallischen Materialschichten radial übereinander. Insofern werden auf das Metallsubstrat sequenziell wenigstens zehn, vorzugsweise wenigstens 20, metallische Materialschichten, insbesondere aus einem Gleitlagerwerkstoff, übereinander aufgebracht. Mit anderen Worten werden die Materialschichten nacheinander radial aufeinander aufgetragen.

Die Materialschichten bilden gemeinsam die Gleitschicht. Insofern handelt es sich bei dem vorgeschlagenen Verfahren auch um ein Verfahren zum Herstellen einer metallischen Gleitschicht auf einem Metallsubstrat. Vorzugsweise beträgt eine Gesamtschichtdicke der Gleitschicht mehr als 0,15 mm, insbesondere mindestens 0,2 mm.

Erfindungsgemäß erfolgt das Auftragen der Materialschichten mittels Auftragschweißen.

Das Auftragen der Materialschichten erfolgt dabei derart, dass eine Schichtdicke einer dem Metallsubstrat am nächsten liegenden Basisschicht der wenigstens zehn Materialschichten maximal 50 µm, vorzugsweise maximal 30 µm, weiter vorzugsweise maximal 20 µm, weiter vorzugsweise maximal 10 µm, weiter vorzugsweise maximal 5 µm, insbesondere 5 bis 50 µm, beträgt.

Die vorgeschlagene Verfahren ermöglicht es, Gleitlagerkomponenten mit reduziertem Verschleiß und höherer Dauerfestigkeit auf effiziente und flexible Art und Weise herzustellen. Dadurch, dass die Basisschicht derart aufgetragen wird, dass eine Maximaldicke von maximal 50 µm, vorzugsweise maximal 30 µm, weiter vorzugsweise maximal 20 µm, weiter vorzugsweise maximal 10 µm, weiter vorzugsweise maximal 5 µm, nicht überschreitet, wird beim Auftragen nur ein vergleichsweise flaches Schmelzbad unmittelbar auf dem Metallsubstrat bereitgestellt, sodass eine an der Metallsubstrat Oberfläche bereitgestellte Schmelzenergie verringert ist. Auf diese Weise wird eine möglichst geringe Beeinflussung des Metallsubstrats erzielt, ohne dabei die Haftung zu reduzieren. Insbesondere wurde im Rahmen der Erfindung erkannt, dass durch das erfindungsgemäße Verfahren eine Lötrissigkeit (Gefahr der Versprödung und Rissbildung bei Kontakt einer benetzenden Metallschmelze mit einem metallischen Bauteil) signifikant reduziert werden kann, was sich positiv auf die Dauerfestigkeit auswirkt. Dieser Effekt ist besonders vorteilhaft ausgeprägt bei einer Basisschicht mit einer Schichtdicke von kleiner 30 µm, weiter vorzugsweise kleiner 20 µm. Die so hergestellten Gleitlagerkomponenten besitzen optimierte Eigenschaften für hydrodynamische und hydrostatische Anwendungen.

Das vergleichsweise flache Schmelzbad beim Auftragen auf der Substratoberfläche führt zudem dazu, dass im Schmelzbad ein sehr hoher Temperaturgradient und somit eine vergleichsweise schnelle Abkühlgeschwindigkeit der Schmelze erzielt werden kann. Auf diese Weise lässt sich in der Gleitschicht ein besonders feinkörniges Gefüge erzielen. Beispielsweise können bei einem Einsatz von Bronze als Auftragwerkstoff Korngrößen mit einem mittleren Korndurchmesser (gemessen im Linienschnittverfahren nach ASTM-E112) von kleiner 30 µm, vorzugweise kleiner 20 µm, weiter vorzugsweise zwischen 10 und 15 µm, realisiert werden. Auf diese Weise kann eine Härte signifikant gesteigert werden (Hall-Patch-Effekt) ohne dabei maßgeblich an Duktilität einzubüßen. Beispielsweise konnten bei einer CuSn12Ni2P-Legierung Brinellhärten von bis zu 200 HB erzielt werden.

Wie nachfolgend noch näher erläutert, ermöglicht es das vorgeschlagene Mehrschicht-Verfahren außerdem, die einzelnen Materialschichten hinsichtlich ihrer Eigenschaften zu verändern und somit die Gleitschicht hinsichtlich ihrer mechanischen und tribologischen Eigenschaften zu optimieren.

Unter Schichtdicke wird vorliegend insbesondere eine mittlere Schichtdicke orthogonal zu einer Oberfläche des Metallsubstrats verstanden.

Unter Auftragschweißen (auch als Cladding bezeichnet) wird vorliegend insbesondere ein Verfahren verstanden, bei dem auf ein Substrat ein Oberflächenauftrag mittels Aufschmelzen eines Auftragwerkstoffs in einer Wärmequelle unter gleichzeitigem oder anschließendem Aufbringen auf die Substratoberfläche erfolgt. Unter Auftragwerkstoff wird vorliegend insbesondere das Ausgangsmaterial verstanden, welches der Wärmequelle zum Aufschmelzen zugeführt wird. Der Auftragwerkstoff kann in Pulverform, z.B. als Metallpulver, oder auch als Draht oder Band bereitgestellt sein.

Vorzugsweise erfolgt das Auftragen der Materialschichten mittels Hochgeschwindigkeits-Laserauftragschweißen. Unter Laserauftragschweißen wird vorliegend insbesondere Auftragsschweißen verstanden, bei dem ein Laser als Wärmequelle zum Aufschmelzen des Auftragwerkstoffs dient. Unter Hochgeschwindigkeits-Laserauftragschweißen wird vorliegend Laserauftragschweißen mit einer Schweißgeschwindigkeit mehr als 50 m/min verstanden. Besonders bevorzugt erfolgt das Auftragen der Materialschichten mittels Hochgeschwindigkeits-Laser-Pulver-Auftragsschweißen.

Unter Schweißgeschwindigkeit wird vorliegend eine Relativgeschwindigkeit von Laser und Metallsubstrat parallel zu einer Substratoberfläche verstanden.

Vorzugweise beträgt eine Schweißgeschwindigkeit beim Auftragen zumindest der Basisschicht, insbesondere aller Materialschichten, mindestens 50 m/min, weiter vorzugsweise mindestens 100 m/min, weiter vorzugsweise 50 - 300 m/min. Auf diese Weise lässt sich das Risiko der Lötrissigkeit weiter reduzieren.

Es ist denkbar, dass zumindest eine Teilmenge der Materialschichten mit der gleichen Schweißgeschwindigkeit aufgetragen werden. Insbesondere können alle Materialschichten mit der gleichen Schweißgeschwindigkeit aufgetragen werden. Es ist auch denkbar, dass zumindest eine Teilmenge der Materialschichten mit unterschiedlichen Schweißgeschwindigkeiten aufgetragen werden. Beispielsweise ist es denkbar, dass eine Schweißgeschwindigkeit beim Auftragen der Basisschicht größer ist als eine Schweißgeschwindigkeit beim Auftragen zumindest einer der weiteren Materialschichten.

Zumindest eine Teilmenge der Materialschichten kann mit unterschiedlichen Schweißparametern aufgetragen werden, beispielsweise mit einer unterschiedlichen Schweißgeschwindigkeit, einer unterschiedlichen Pulverauftragsrate und/oder einer unterschiedlichen Wärmeleistung, insbesondere Laserleistung.

Gemäß einer beispielhaften Realisierungsform des Laserauftragschweißens wird der abzuscheidende Werkstoff (Auftragwerkstoff), insbesondere Gleitlagerwerkstoff, in einem Fokus eines Laserstrahls geschmolzen und dann abgeschieden. Insbesondere wird der abzuscheidende Werkstoff als Pulver bereitgestellt, wobei das Pulver in dem Fokus des Laserstrahls geschmolzen und dann abgeschieden wird. Insbesondere wird zumindest eine Teilmenge des Pulvers bereits vor dem Auftreffen auf einer Substratoberfläche in dem Laserstrahl aufgeschmolzen. Insbesondere werden der Fokus und das Metallsubstrat mit einer Geschwindigkeit von mindestens 50 m/min, vorzugsweise mindestens 100 m/min, weiter vorzugsweise 50 - 300 m/min, relativ zueinander verlagert.

Vorzugsweise beträgt eine Laserleistung beim Auftragen der Materialschichten mindestens 15 kW, vorzugsweise mindestens 20 kW. Es ist denkbar, dass alle Materialschichten mit der gleichen Laserleistung aufgetragen werden. Um das Risiko der Lötrissigkeit weiter zu reduzieren, kann es aber auch vorteilhaft sein, wenn eine Laserleistung beim Auftragen der Basisschicht geringer ist als beim Auftragen zumindest einer der weiteren Materialschichten.

In vorteilhafter Weise kann das Auftragen der Materialschichten derart erfolgen, dass eine Schichtdicke einer jeweiligen Materialschicht, also sowohl der Basisschicht als auch der weiteren auf die Basisschicht aufgetragenen Materialschichten, maximal 50 µm, vorzugsweise maximal 30 µm, weiter vorzugsweise maximal 20 µm, weiter vorzugsweise maximal 10 µm, weiter vorzugsweise maximal 5 µm, insbesondere 5 bis 50 µm, beträgt. Eine derart hergestellte Gleitschicht weist ein besonders homogenes feinkörniges Gefüge auf.

Es ist denkbar, dass alle Materialschichten die gleiche Schichtdicke aufweisen. Es ist auch denkbar, dass zumindest eine Teilmenge der auf die Basisschicht aufgebrachten weiteren Materialschichten eine größere Schichtdicke als die Basisschicht aufweist.

Gemäß einer vorteilhaften Ausgestaltung kann das Auftragen der Materialschichten derart erfolgen, dass in zumindest der Basisschicht, vorzugsweise allen Materialschichten, ein mittlerer Korndurchmesser, gemessen im Linienschnittverfahren nach ASTM-E112, maximal 30 µm, vorzugsweise maximal 20 µm, weiter vorzugsweise 10 µm bis 15 µm beträgt.

Vorzugsweise wird die Basisschicht direkt, also unmittelbar, auf das Metallsubstrat aufgebracht. Die Basisschicht kann insofern in direktem Kontakt mit dem Metallsubstrat sein. Die weiteren Schichten sind dann auf die Basisschicht aufgetragen und haben daher keinen direkten Kontakt zum Metallsubstrat. Dies schließt jedoch nicht aus, dass das Metallsubstrat selbst bereits einen Mehrschichtaufbau aufweist. Beispielsweise ist es denkbar, dass es sich bei dem Metallsubstrat um ein Stahlsubstrat mit einer darauf abgeschiedenen Korrosionsschutzschicht handelt.

Darüber hinaus kann es vorteilhaft sein, wenn die weiteren Materialschichten direkt auf die Basisschicht und übereinander aufgetragen werden. Insbesondere werden auch die weiteren Materialschichten direkt aufeinander aufgetragen. Insofern werden insbesondere keine Zwischenschichten oder Zwischenräume, wie Schmiertaschen, zwischen den Materialschichten vorgesehen.

Wie vorstehend erwähnt, bilden die wenigstens zehn, vorzugsweise wenigstens 20, Materialschichten gemeinsam die Gleitschicht. Es ist denkbar, dass die Basisschicht und die weiteren Materialschichten aus demselben Auftragwerkstoff aufgetragen werden. Es kann also vorzugsweise der gleiche Ausgangswerkstoff, bzw. das gleiche Material, zum Beschichten verwendet werden (z.B. gleiches Pulver). Eine solche Ausgestaltung begünstigt eine besonders homogene Gleitschicht. Dies schließt jedoch nicht aus, dass die Materialschichten nach dem Auftragen lokal eine unterschiedliche Mikrostruktur, bspw. Gefüge, aufweisen, welche sich beispielsweise aus ggf. lokal unterschiedlicher Wärmeableitung oder Substratbeschaffenheit ergeben kann.

Es ist auch denkbar, dass zumindest eine Teilmenge der Materialschichten zwar aus dem gleichen Auftragwerkstoff, aber mit unterschiedlichen Schweißparametern aufgetragen werden, bspw. beispielsweise mit einer unterschiedlichen Schweißgeschwindigkeit, einer unterschiedlichen Pulverauftragsrate und/oder einer unterschiedlichen Laserleistung.

Es ist auch denkbar, dass zumindest eine Teilmenge der Materialschichten aus einem unterschiedlichen Auftragwerkstoff oder einem Auftragwerkstoff mit unterschiedlicher Werkstoffzusammensetzung aufgetragen werden. Insofern können zumindest eine Teilmenge der Materialschichten einen unterschiedlichen Werkstoff oder einen Werkstoff mit unterschiedlicher Werkstoffzusammensetzung aufweisen. Auf diese Weise ist es möglich, in der Gleitschicht einen Materialgradienten auszubilden. Beispielsweise ist es denkbar, einen Zinn-Gehalt oder einen Nickel-Gehalt zu verändern, um weichere oder härtere Schichten zu erzielen. Es ist auch beispielsweise denkbar, bei der oder den äußeren, also von dem Metallsubstrat am weitesten entfernten, Materialschichten einen Siliziumanteil zu erhöhen, um eine Verschleißbeständigkeit zu verbessern. Es ist beispielsweise auch denkbar, bei der oder den äußeren, also von dem Metallsubstrat am weitesten entfernten, Materialschichten einen Wismut-Gehalt zu erhöhen, um so eine erhöhte Schmierwirkung zu erzielen.

Besonders vorteilhaft ist es, wenn die Materialschichten, insbesondere alle Materialschichten, aus einem Gleitlagerwerkstoff (auch als Gleitmaterial bezeichnet) bestehen oder dieses umfassen. Der Gleitlagerwerkstoff ist insbesondere ausgewählt aus der Gruppe umfassend Bronze, Bronzelegierungen, Messing, Messingbasislegierungen, Aluminiumbasislegierungen, und Zinnbasislegierungen. Vorzugsweise handelt es sich bei dem Gleitlagerwerkstoff um eine Kupferbasislegierung, weiter vorzugweise um eine Kupfer-Bronze, weiter vorzugweise um eine Kupfer-Zinn-Bronze (z.B. CuSn, CuSnNi oder CuSnZn). Weitere vorteilhafte Gleitlagerwerkstoffe umfassen Aluminium-Bronzen und Mangan-Bronzen.

Die eingangs genannte Aufgabe wird auch durch eine Gleitlagerkomponente mit den Merkmalen des Anspruchs 9 gelöst. Hierbei handelt es sich insbesondere um eine Gleitlagerwelle oder Gleitlagerschale. Beispielhaft kann es sich um eine Gleitlagerkomponente für ein Getriebe einer Windkraftanlage handeln. Bei der Gleitlagerkomponente kann es sich beispielsweise auch um eine Anlaufscheibe oder einen Anlaufring handeln. Insbesondere kann die Gleitlagerkomponente gemäß einem der vorstehend beschriebenen Verfahren herstellt sein.

Die Gleitlagerkomponente umfasst ein Metallsubstrat, insbesondere aus Stahl oder beschichtetem Stahl. Vorzugsweise handelt es sich bei dem Metallsubstrat um eine Welle oder Achse. Auf dem Metallsubstrat ist eine metallische Gleitschicht von insbesondere höchstens 3 mm Dicke aufgebracht. Bei der Gleitschicht kann es sich insbesondere um eine Bronzeschicht handeln. Die Gleitschicht weist einen Mehrschichtaufbau aus wenigstens zehn, vorzugsweise wenigstens 20, sequenziell aufeinander aufgetragenen metallischen Materialschichten, insbesondere aus einem Gleitlagerwerkstoff, auf. Insbesondere ist die Gleitschicht aus wenigstens zehn, vorzugsweise wenigstens 20, sequenziell aufeinander aufgetragenen metallischen Materialschichten gebildet. Die Materialschichten sind jeweils mittels Auftragsschweißen, insbesondere Hochgeschwindigkeits-Laserauftragschweißen, aufgetragen.

Erfindungsgemäß weist eine dem Metallsubstrat am nächsten liegende Basisschicht der wenigstens zehn Materialschichten eine Schichtdicke von maximal 50 µm, vorzugsweise maximal 30 µm, weiter vorzugsweise maximal 20 µm, weiter vorzugsweise maximal 10 µm, weiter vorzugsweise maximal 5 µm, insbesondere 5 bis 50 µm, auf.

Die vorstehend im Zusammenhang mit dem Verfahren beschriebenen Vorteile und optionalen Merkmale können auch zur Ausgestaltung der Gleitlagerkomponente dienen, sodass zur Vermeidung von Wiederholungen auf vorstehende Offenbarung hierzu verwiesen wird.

Die auf die Basisschicht aufgetragenen weiteren Materialschichten können ebenfalls jeweils eine Schichtdicke von maximal 50 µm, vorzugsweise maximal 30 µm, weiter vorzugsweise maximal 20 µm, weiter vorzugsweise maximal 10 µm, weiter vorzugsweise maximal 5 µm, insbesondere 5 bis 50 µm, aufweisen.

Es ist denkbar, dass alle Materialschichten die gleiche Schichtdicke aufweisen. Es ist auch denkbar, dass zumindest eine Teilmenge der auf die Basisschicht aufgebrachten weiteren Materialschichten eine größere Schichtdicke als die Basisschicht aufweist.

Gemäß einer vorteilhaften Ausgestaltung kann in zumindest der Basisschicht, vorzugsweise allen Materialschichten, ein mittlerer Korndurchmesser, gemessen im Linienschnittverfahren nach ASTM-E112, maximal 30 µm, vorzugsweise maximal 20 µm, weiter vorzugsweise 10 µm bis 15 µm, betragen.

Vorzugsweise ist die Basisschicht direkt, also unmittelbar, auf das Metallsubstrat aufgetragen.

Vorzugsweise sind die Materialschichten direkt, also unmittelbar und ohne Abstand, aufeinander aufgetragen.

Zumindest eine Teilmenge der Materialschichten können aus dem gleichen Auftragwerkstoff aufgetragen sein. Insbesondere können alle Materialschichten aus dem gleichen Auftragwerkstoff aufgetragen sein.

Es ist auch denkbar, dass zumindest eine Teilmenge der Materialschichten aus einem unterschiedlichen Auftragwerkstoff oder einem Auftragwerkstoff mit unterschiedlicher Werkstoffzusammensetzung aufgetragen sind. Es ist auch denkbar, dass alle Materialschichten aus einem Auftragwerkstoff mit unterschiedlicher Werkstoffzusammensetzung aufgetragen sind.

Vorzugsweise ist zumindest eine Teilmenge der Materialschichten, vorzugsweise alle Materialschichten, aus einem Gleitlagerwerkstoff (Gleitmaterial) aufgetragen. Insofern können zumindest eine Teilmenge der Materialschichten, vorzugsweise alle Materialschichten, aus einem Gleitlagerwerkstoff bestehen oder diesen umfassen.

Der Gleitlagerwerkstoff ist vorzugsweise ausgewählt aus der Gruppe umfassend Bronze, Bronzelegierungen, Messing, Messingbasislegierungen, Aluminiumbasislegierungen, und Zinnbasislegierungen. Vorzugsweise sind die Materialschichten aus einer Kupferbasislegierung gebildet, weiter vorzugweise aus einer Kupfer-Bronze, weiter vorzugweise aus einer Kupfer-Zinn-Bronze (z.B. CuSn, CuSnNi oder CuSnZn). Weitere vorteilhafte Gleitlagerwerkstoffe umfassen Aluminium-Bronzen und Mangan-Bronzen.

Die Erfindung wird im Folgenden anhand der Figuren näher erläutert. Es zeigen:
- Figur 1: vereinfachte skizzierte Darstellung einer Gleitlagerkomponenten in einer Schnittansicht; und
- Figur 2: vereinfachte skizzierte Darstellung zur Erläuterung einer Ausgestaltung eines Laserauftragschweißverfahrens.

In der nachfolgenden Beschreibung sowie in den Figuren sind für identische oder einander entsprechende Merkmale jeweils dieselben Bezugszeichen verwendet.

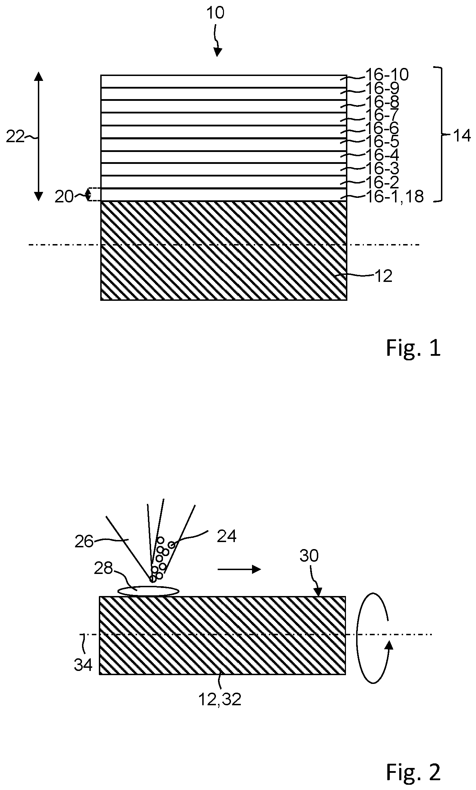

Die Figur 1 zeigt in vereinfachter skizzierter Darstellung eine Gleitlagerkomponente, welche insgesamt mit dem Bezugszeichen 10 bezeichnet ist. Die Gleitlagerkomponente umfasst ein Metallsubstrat 12 und eine unmittelbar darauf aufgebrachte Gleitschicht 14. Das Metallsubstrat 12 und die Gleitschicht 14 sind in der Figur 1 nicht maßstabsgetreu, sondern lediglich schematisch dargestellt.

Bei dem Metallsubstrat 12 kann es sich beispielsweise um eine Welle oder Achse handeln. Insbesondere ist das Metallsubstrat 12 aus einem Stahl oder beschichteten Stahl gefertigt.

Wie aus Figur 1 ersichtlich, weist die Gleitschicht 14 einen Mehrschichtaufbau auf, umfassend wenigstens zehn, im Beispiel genau zehn, Materialschichten 16-1, 16-2, 16-3, 16-4, 16-5, 16-6, 16-7, 16-8, 16-9, 16-10 (im Folgenden, wenn nicht explizit anders erwähnt, der einfacheren Lesbarkeit halber lediglich mit 16 bezeichnet). Die Materialschichten 16 sind mittels Auftragsschweißen, vorzugsweise Hochgeschwindigkeits-Laserauftragsschweißen, unmittelbar aufeinander aufgetragen (nachfolgend noch näher erläutert).

Wie vorstehend erwähnt, weist eine dem Metallsubstrat 14 am nächsten liegenden (im Beispiel unmittelbar auf eine Substratoberfläche des Metallsubstrats 12 aufgetragene) Basissicht 18 (im Beispiel der Materialschicht 16-1 entsprechend) eine Schichtdicke 20 von maximal 50 µm, vorzugsweise maximal 30 µm, weiter vorzugsweise maximal 20 µm, weiter vorzugsweise maximal 10 µm, weiter vorzugsweise maximal 5 µm, auf.

Eine Gesamtschichtdicke 22 der Gleitschicht 14 beträgt vorzugsweise maximal 3 mm, weiter vorzugsweise maximal 2 mm.

Im dargestellten Beispiel weisen die Materialschichten 16 alle die gleiche Schichtdicke auf. Bei nicht dargestellten Ausgestaltungen können die Materialschichten 16 oder zumindest eine Teilmenge der Materialschichten 16 aber auch unterschiedliche Schichtdicken aufweisen.

Wie vorstehend erwähnt, sind die Materialschichten 16 vorzugsweise aus einem Gleitlagerwerkstoff aufgetragen, insbesondere aus Bronze oder einer Bronzelegierung.

Zum Herstellen einer solchen Gleitlagerkomponente 10 wird zunächst das Metallsubstrat 12 bereitgestellt und sodann die einzelnen Materialschichten 16 nacheinander aufeinander aufgetragen.

Das Auftragen erfolgt mittels Auftragschweißen, vorzugsweise Hochgeschwindigkeits-Laserauftragschweißen. Wie vorstehend erwähnt, wird hierbei ein Auftragwerkstoff 24 in einer Wärmequelle, im Beispiel einem Laserstrahl 26, aufgeschmolzen und als Schmelzebad 28 auf die Substratoberfläche 30 abgeschieden (in Figur 2 skizziert dargestellt). Der Auftragwerkstoff 24 kann insbesondere in Pulverform zugeführt werden.

Zum Aufbringen der Materialschichten 16 werden der Laserstrahl 26 und das Metallsubstrat 12 relativ zueinander parallel zur Substratoberfläche 30 verlagert. Bei einer Ausgestaltung des Metallsubstrats 12 als Welle 32 ist es beispielsweise denkbar, dass die Welle 32 mit einer vorgegebenen Geschwindigkeit um eine Achse 34 rotiert und der Laserstrahl 26 optional axial verlagert wird (in Figur 2 durch die Pfeile angedeutet).

Es ist auch denkbar, dass das Metallsubstrat 12 ortsfest ist und der Laserstrahl 26 relativ zu dem Metallsubstrat 12 verlagert wird.

Nach dem Auftragen einer ersten Materialschicht (bspw. der Basisschicht 16-1, 18) wird die nächste Schicht (bspw. die Schicht 16-2), insbesondere unmittelbar, auf diese Materialschicht, insbesondere in gleicher Weise, aufgetragen.

Wie vorstehend erwähnt erfolgt das Auftragen der Materialschichten 16 vorzugsweise mit einer Schweißgeschwindigkeit (Relativgeschwindigkeit von Laser 26 und Metallsubstrat 12 parallel zur Substratoberfläche 30) von mehr als 60 m/min, vorzugsweise mindestens 100 m/min.

Eine Laserleistung beträgt beim Auftragen vorzugsweise mehr als 15 kW, weiter vorzugsweise mehr als 20 kW.

Wie vorstehend erwähnt, ist es denkbar, dass alle Materialschichten 16 mit den gleichen Schweißparametern aufgetragen werden. Es ist auch denkbar, dass zumindest eine Teilmenge der Materialschichten 16 mit unterschiedlichen Schweißparametern aufgetragen werden.

## Patentansprüche

1. Verfahren zum Herstellen einer Gleitlagerkomponente (10), umfassend ein Metallsubstrat (12), insbesondere eine Welle (32) oder eine Schale, insbesondere aus Stahl oder beschichtetem Stahl, und
eine auf das Metallsubstrat (12) aufgebrachte metallische Gleitschicht (14),
das Verfahren umfassend:
- Bereitstellen des Metallsubstrats (12);
- Aufbringen der Gleitschicht auf das Metallsubstrat (12), umfassend das sequentielle Aufbringen von wenigstens zehn, vorzugsweise wenigstens 20, metallischen Materialschichten (16) übereinander, welche gemeinsam die Gleitschicht (14) bilden, wobei das Auftragen der Materialschichten (16) mittels Auftragschweißen derart erfolgt, dass eine Schichtdicke (20) einer dem Metallsubstrat (12) am nächsten liegenden Basisschicht (18) der wenigstens zehn Materialschichten (16) maximal 50 µm beträgt.

2. Verfahren nach Anspruch 1, wobei das Auftragen der Materialschichten (16) derart erfolgt, dass eine Schichtdicke (20) der Basisschicht (18) maximal 30 µm, vorzugsweise maximal 20 µm, weiter vorzugsweise maximal 10 µm, weiter vorzugsweise maximal 5 µm, insbesondere 5 bis 50 µm, beträgt.

3. Verfahren nach Anspruch 1 oder 2, wobei das Auftragen der Materialschichten (16) mittels Hochgeschwindigkeits-Laserauftragschweißen erfolgt.

4. Verfahren nach einem der vorherigen Ansprüche, wobei eine Schweißgeschwindigkeit beim Auftragen zumindest der Basisschicht (18), insbesondere aller Materialschichten (16), mindestens 60 m/min beträgt, vorzugsweise mindestens 100 m/min, weiter vorzugsweise 60 - 300 m/min.

5. Verfahren nach einem der vorherigen Ansprüche, wobei die Basisschicht (18) direkt auf das Metallsubstrat (12) aufgebracht wird.

6. Verfahren nach einem der vorherigen Ansprüche, wobei die weiteren Materialschichten (16-2, 16-3, 16-4, 16-5, 16-6, 16-7, 16-8, 1-9, 16-10) direkt auf die Basisschicht (18) und insbesondere direkt aufeinander aufgetragen werden.

7. Verfahren nach einem der vorherigen Ansprüche, wobei alle Materialschichten (16) einschließlich der Basisschicht (18) aus demselben Auftragwerkstoff (24) aufgetragen werden.

8. Verfahren nach einem der Ansprüche 1 bis 6, wobei zumindest eine Teilmenge der Materialschichten (16) aus einem unterschiedlichen Auftragwerkstoff (24) oder einem Auftragwerkstoff (24) mit unterschiedlicher Werkstoffzusammensetzung aufgetragen werden.

9. Gleitlagerkomponente (10), insbesondere Gleitlagerwelle oder Gleitlagerschale, insbesondere hergestellt nach einem Verfahren nach einem der vorherigen Ansprüche, umfassend ein Metallsubstrat (12) und eine auf das Metallsubstrat (12) aufgebrachte metallische Gleitschicht (14),
wobei die Gleitschicht (14) wenigstens zehn, vorzugsweise wenigstens 20, aufeinander aufgetragene metallische Materialschichten (16), insbesondere aus einem Gleitlagerwerkstoff, umfasst, wobei eine dem Metallsubstrat (12) am nächsten liegende Basisschicht (18) der wenigstens zehn Materialschichten (16) eine Schichtdicke (20) von maximal 50 µm aufweist, **dadurch gekennzeichnet, dass** die Materialschichten jeweils mittels Auftragsschweißen aufgetragen sind.

10. Gleitlagerkomponente (10) nach dem vorherigen Anspruch, wobei die Basisschicht (18) eine Schichtdicke (20) von maximal 30 µm, weiter vorzugsweise maximal 20 µm, weiter vorzugsweise maximal 10 µm, weiter vorzugsweise maximal 5 µm, insbesondere 5 bis 50 µm aufweist.

11. Gleitlagerkomponente (10) nach einem der Ansprüche 9 oder 10, wobei zumindest eine Teilmenge der auf die Basisschicht (18) aufgetragenen weiteren Materialschichten (16-2, 16-3, 16-4, 16-5, 16-6, 16-7, 16-8, 16-9, 16-10) eine größere Schichtdicke (20) als die Basisschicht (18) aufweist.

12. Gleitlagerkomponente (10) nach einem der Ansprüche 9 bis 11, wobei die Basisschicht (18) direkt auf das Metallsubstrat (12) aufgetragen ist und/oder wobei die Materialschichten (16) direkt aufeinander aufgetragen sind.

13. Gleitlagerkomponente (10) nach einem der Ansprüche 9 bis 12, wobei die Materialschichten (16) aus einem Gleitlagerwerkstoff bestehen oder dieses umfassen, insbesondere wobei der Gleitlagerwerkstoff eine Kupfer-Basislegierung, vorzugsweise eine Bronze oder Bronzelegierungen, ist.

14. Gleitlagerkomponente (10) nach einem der Ansprüche 9 bis 13, wobei zumindest eine Teilmenge der Materialschichten (16) aus einem unterschiedlichen Auftragwerkstoff (24) oder einem Auftragwerkstoff (24) mit unterschiedlicher Werkstoffzusammensetzung aufgetragen sind.

15. Gleitlagerkomponente (10) nach einem der Ansprüche 9 bis 13, wobei die Materialschichten (16) aus demselben Auftragwerkstoff (24), insbesondere aus Gleitlagerwerkstoff, aufgetragen sind.

## Claims

1. Method for producing a plain bearing component (10) comprising a metal substrate (12), in particular a shaft (32) or a shell, in particular made of steel or coated steel, and
a metal sliding layer (14) applied to the metal substrate (12),
the method comprising:
- providing the metal substrate (12);
- applying the sliding layer to the metal substrate (12), comprising the sequential application of at least ten, preferably at least 20, metal material layers (16) one above the other, which together form the sliding layer (14), wherein the material layers (16) are applied by means of build-up welding such that a layer thickness (20) of a base layer (18), closest to the metal substrate (12), of the at least ten material layers (16) is at most 50 µm.

2. Method according to claim 1, wherein the material layers (16) are applied in such a way that a layer thickness (20) of the base layer (18) is at most 30 µm, preferably at most 20 µm, more preferably at most 10 µm, more preferably at most 5 µm, in particular 5 to 50 µm.

3. Method according to claim 1 or 2, wherein the material layers (16) are applied by means of high-speed laser deposition welding.

4. Method according to any of the preceding claims, wherein a welding speed during application of at least the base layer (18), in particular all material layers (16), is at least 60 m/min, preferably at least 100 m/min, more preferably 60 - 300 m/min.

5. Method according to any of the preceding claims, wherein the base layer (18) is applied directly to the metal substrate (12).

6. Method according to any of the preceding claims, wherein the further material layers (16-2, 16-3, 16-4, 16-5, 16-6, 16-7, 16-8, 1-9, 16-10) are applied directly to the base layer (18) and in particular directly to one another.

7. Method according to any of the preceding claims, wherein all material layers (16) including the base layer (18) are applied from the same coating material (24).

8. Method according to any of claims 1 to 6, wherein at least some of the material layers (16) are applied from a different coating material (24) or a coating material (24) having a different material composition.

9. Plain bearing component (10), in particular plain bearing shaft or plain bearing shell, in particular produced in accordance with a method according to any of the preceding claims, comprising a metal substrate (12) and a metal sliding layer (14) applied to the metal substrate (12),
the sliding layer (14) comprising at least ten, preferably at least 20, metal material layers (16) applied to one another, in particular made of a plain bearing material, a base layer (18), closest to the metal substrate (12), of the at least ten material layers (16) having a layer thickness (20) of at most 50 µm, **characterized in that** the material layers are each applied by means of build-up welding.

10. Plain bearing component (10) according to the preceding claim, wherein the base layer (18) has a layer thickness (20) of at most 30 µm, more preferably at most 20 µm, more preferably at most 10 µm, more preferably at most 5 µm, in particular 5 to 50 µm.

11. Plain bearing component (10) according to any of claims 9 or 10, wherein at least a portion of the further material layers (16-2, 16-3, 16-4, 16-5, 16-6, 16-7, 16-8, 16-9, 16-10) applied to the base layer (18) has a greater layer thickness (20) than the base layer (18).

12. Plain bearing component (10) according to any of claims 9 to 11, wherein the base layer (18) is applied directly to the metal substrate (12) and/or wherein the material layers (16) are applied directly to one another.

13. Plain bearing component (10) according to any of claims 9 to 12, wherein the material layers (16) consist of or comprise a plain bearing material, in particular wherein the plain bearing material is a copper-based alloy, preferably a bronze or bronze alloys.

14. Plain bearing component (10) according to any of claims 9 to 13, wherein at least some of the material layers (16) are applied from a different coating material (24) or a coating material (24) having a different material composition.

15. Plain bearing component (10) according to any of claims 9 to 13, wherein the material layers (16) are applied from the same coating material (24), in particular from plain bearing material.

## Revendications

1. Procédé de fabrication d'un composant de palier lisse (10), comprenant un substrat métallique (12), en particulier un arbre (32) ou un coussinet, en particulier en acier ou en acier revêtu, et
une couche de glissement métallique (14) appliquée sur le substrat métallique (12),
le procédé comprenant:
- fournir le substrat métallique (12);
- appliquer la couche de glissement sur le substrat métallique (12), comprenant l'application successive d'au moins dix, de préférence d'au moins vingt, couches de matériau métallique (16) superposées qui forment ensemble la couche de glissement (14), dans lequel les couches de matériau (16) sont appliquées par soudage par rechargement de telle sorte qu'une épaisseur de couche (20) d'une couche de base (18) desdites au moins dix couches de matériau (16), qui est la plus proche du substrat métallique (12) soit de 50 µm au maximum.

2. Procédé selon la revendication 1, dans lequel les couches de matériau (16) sont appliquées de telle sorte qu'une épaisseur de couche (20) de la couche de base (18) soit de 30 µm au maximum, de préférence de 20 µm au maximum, en outre de préférence de 10 µm au maximum, en outre de préférence de 5 µm au maximum, en particulier de 5 à 50 µm.

3. Procédé selon la revendication 1 ou 2, dans lequel les couches de matériau (16) sont appliquées par soudage par rechargement laser à grande vitesse.

4. Procédé selon l'une quelconque des revendications précédentes, dans lequel une vitesse de soudage lors de l'application d'au moins la couche de base (18), en particulier de toutes les couches de matériau (16), est d'au moins 60 m/min, de préférence d'au moins 100 m/min, en outre de préférence de 60 à 300 m/min.

5. Procédé selon l'une quelconque des revendications précédentes, dans lequel la couche de base (18) est appliquée directement sur le substrat métallique (12).

6. Procédé selon l'une quelconque des revendications précédentes, dans lequel les autres couches de matériau (16-2, 16-3, 16-4, 16-5, 16-6, 16-7, 16-8, 16-9, 16-10) sont appliquées directement sur la couche de base (18) et en particulier directement les unes sur les autres.

7. Procédé selon l'une quelconque des revendications précédentes, dans lequel toutes les couches de matériau (16), y compris la couche de base (18), sont appliquées à partir du même matériau de revêtement (24).

8. Procédé selon l'une quelconque des revendications 1 à 6, dans lequel au moins une partie des couches de matériau (16) sont appliquées à partir d'un matériau de revêtement (24) différent ou à partir d'un matériau de revêtement (24) ayant une composition différente de matériau.

9. Composant de palier lisse (10), en particulier arbre de palier lisse ou coussinet de palier lisse, fabriqué en particulier selon un procédé selon l'une quelconque des revendications précédentes, comprenant un substrat métallique (12) et une couche de glissement métallique (14) appliquée sur le substrat métallique (12),
dans lequel la couche de glissement (14) comprend au moins dix, de préférence au moins vingt, couches de matériau métallique (16) appliquées les unes sur les autres, en particulier en un matériau de palier lisse, dans lequel une couche de base (18) desdites au moins dix couches de matériau (16), qui est la plus proche du substrat métallique (12), présente une épaisseur de couche (20) de 50 µm au maximum, **caractérisé par le fait que** les couches de matériau sont chacune appliquées par soudage par rechargement.

10. Composant de palier lisse (10) selon la revendication précédente, dans lequel la couche de base (18) présente une épaisseur de couche (20) de 30 µm au maximum, en outre de préférence de 20 µm au maximum, en outre de préférence de 10 µm au maximum, en outre de préférence de 5 µm au maximum, en particulier de 5 à 50 µm.

11. Composant de palier lisse (10) selon l'une quelconque des revendications 9 ou 10, dans lequel au moins une partie des autres couches de matériau (16-2, 16-3, 16-4, 16-5, 16-6, 16-7, 16-8, 16-9, 16-10) appliquées sur la couche de base (18) présente une épaisseur de couche (20) supérieure à celle de la couche de base (18).

12. Composant de palier lisse (10) selon l'une quelconque des revendications 9 à 11, dans lequel la couche de base (18) est appliquée directement sur le substrat métallique (12) et/ou dans lequel les couches de matériau (16) sont appliquées directement les unes sur les autres.

13. Composant de palier lisse (10) selon l'une quelconque des revendications 9 à 12, dans lequel les couches de matériau (16) sont constituées d'un matériau de palier lisse ou comprennent celui-ci, en particulier dans lequel le matériau de palier lisse est un alliage à base de cuivre, de préférence du bronze ou un alliage de bronze.

14. Composant de palier lisse (10) selon l'une quelconque des revendications 9 à 13, dans lequel au moins une partie des couches de matériau (16) sont appliquées à partir d'un matériau de revêtement (24) différent ou à partir d'un matériau de revêtement (24) ayant une composition différente de matériau.

15. Composant de palier lisse (10) selon l'une quelconque des revendications 9 à 13, dans lequel les couches de matériau (16) sont appliquées à partir du même matériau de revêtement (24), en particulier à partir de matériau de palier lisse.
